# EUROPEAN PATENT SPECIFICATION

(11) **EP 4 229 514 B1**
(45) Date of publication and mention of the grant of the patent: **04.11.2026**
(21) Application number: 20804542.7
(22) Date of filing: 11.11.2020
(51) Int. Cl.: G06F 16/174

(54) **METHOD AND KEY VALUE-BASED DEVICE FOR DATA DEDUPLICATION AND RANDOM ACCESS**
VERFAHREN UND SCHLÜSSELWERTBASIERTE VORRICHTUNG ZUR DATENDEDUPLIZIERUNG UND FÜR DIREKTZUGRIFF
PROCÉDÉ ET DISPOSITIF À BASE DE VALEURS CLÉS POUR DÉDUPLICATION DE DONNÉES ET ACCÈS ALÉATOIRE

(43) Date of publication of application: 23.08.2023
(73) Proprietor: Huawei Technologies Co., Ltd., Shenzhen, Guangdong 518129 (CN)
(72) Inventor: NATANZON, Assaf, 80992 Munich (DE)
(74) Representative: Epping - Hermann - Fischer
(86) International application number: PCT/EP2020/081795
(87) International publication number: WO 2022/100825

(56) References cited:
- US-A1- 2015 293 817
- US-A1- 2020 133 928
- US-B1- 10 310 736
- "Data Deduplication for Data Optimization for Storage and Network Systems", 9 September 2016, SPRINGER INTERNATIONAL PUBLISHING, Cham, ISBN: 978-3-319-42280-0, article DAEHEE KIM ET AL: "Existing Deduplication Techniques", pages: 23 - 76, XP055406161, DOI: 10.1007/978-3-319-42280-0_2

## Description

### TECHNICAL FIELD

The present disclosure relates generally to the field of data protection and deduplication; and more specifically, to a method, a key value-based storage device, and system for storing a data file with generated metadata (e.g. in a smart file format) in a key value-based storage system for achieving variable size deduplication and random access of data in the data file.

### BACKGROUND

Generally, data backup is used to protect and recover data in an event of data loss in a primary storage system (e.g. a host server). For safety reasons, a separate backup system or a storage system is extensively used to store a backup of the data present in the primary storage system. Typically, with time, storage space of the storage system becomes occupied as changes in data or any new data occupy a large storage space in the conventional storage systems. This is undesirable as it causes reduction in performance of the storage systems. Moreover, the cost of data storage, with all the associated costs including cost of storage hardware, continues to be a burden. Typically, data deduplication is a process widely used by the storage system to eliminate duplicate or redundant data stored on the storage system without compromising the fidelity of the original data. In storage systems, generally data is stored in block storage devices, where a given block storage device is a computer data storage device that supports reading and optionally, writing data in fixed-size blocks, sectors, or clusters.

Currently, conventional block storage systems (or devices) usually employ fixed size deduplication to save storage space. The fixed size deduplication divides the data stored in the storage system to fixed-size blocks, such as 8 kB aligned blocks. For each fixed-size block, a signature is created. If the aligned block that is to be written has the same signature as an already stored block in the storage system, the aligned block is considered identical. Hence, the aligned bock is not stored again in the storage system. Instead a pointer is kept for the block identical to the aligned bock in the storage system. However, the fixed size deduplication manifest low deduplication ratio which is undesirable. Further, fixed size deduplication can perform deduplication only if the blocks are identical. Hence, fixed size deduplication fails to deduplicate the blocks if data within each block is similar but not identical. For example, if a first block and a second block are identical but the second block is shifted by certain bytes, say 512 bytes, or an insert switch is added to the second block, fixed size deduplication fails to identify the second block as identical to the first block, and thus, does not provide reliable deduplication of the blocks. There is another conventional technique for employed for data reduction known as differential compression. The differential compression allows better data deduplication than the fixed size deduplication. However, the differential compression requires significant amount of computational processing power (e.g. extensive use of central processing unit) for data deduplication process and thus, increases time and unnecessary use of computational resources to complete an operation.

There is another technical problem of how to randomly access chunks of data. Random access refers to the ability to access data at random and performs better than sequential access if information is to be accessed randomly. Generally, a key value-based store associates each data value with a unique key. In other words, a key value-based storage allows accessing specific data using a key. An application can store arbitrary data as a set of values, where a given value (data) can be retrieved or stored by a given key. In an example, when fixed size chunking is used random access is easy as a key to data may be simply a "file_ID" plus a specified offset. But when chunking a file to variable length pieces, an 8 KB fixed size chunk may then include less than 8 KB of data due to compressible data padding, and due to other issues as described above, for example, byte shifting and insert switches, the complexity is increased and the accuracy for random access is reduced.

Therefore, in light of the foregoing discussion, there exists a need to overcome the aforementioned drawbacks associated with conventional methods, devices, and storage systems for data deduplication.

US 2015/293817 Al discloses a computer implemented method and a secure relational file system for storing and managing data for backup and restore. The secure relational file system receives data, generates first metadata including file-to-sector mapping information, splits the data into fixed sized data chunks, generates second metadata including logical boundaries used for splitting, creates fixed sized data blocks by prepending the second metadata to the fixed sized data chunks, splits each fixed sized data chunk into variable sized data chunks, generates third metadata including unique identifiers for the variable sized data chunks, creates variable sized data blocks by prepending the third metadata and the second metadata to each variable sized data chunk, identifies unique variable sized data chunks of the variable sized data blocks using the unique identifiers, stores the unique variable sized data chunks in chunk files, and stores the first metadata, the second metadata extracted from the variable sized data blocks, and storage locations of the unique variable sized data chunks with the third metadata of the unique variable sized data chunks and duplicate variable sized data chunks in databases.

### SUMMARY

The invention is defined in the independent claims. Advantageous modifications are set forth in the dependent claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
- FIG. 1: is a flowchart of a method for storing a data file in a key value-based storage for achieving variable size deduplication and random access, in accordance with an embodiment of the present disclosure;
- FIG. 2: is a block diagram that illustrates various exemplary components of a key value-based storage device, in accordance with an embodiment of the present disclosure;
- FIG. 3: is an exemplary illustration of chunking of a data file, in accordance with an embodiment of the present disclosure;
- FIG. 4: is an exemplary illustration of operation of a data insertion at the start of a data file that is divided into variable sized chunks, in accordance with another embodiment of the present disclosure;
- FIG. 5A, 5B, and 5C: are exemplary illustrations of configuring a data file to allow writing a new sequence of data in the data file without data spilling between different chunks, in accordance with an embodiment of the present disclosure;
- FIG. 6: is an illustration of an exemplary data structure of a chunk with a metadata block at a beginning of the chunk, in accordance with an embodiment of the present disclosure; and
- FIG. 7: is an illustration that depicts exemplary operations of writing compressed variable chunks to a storage and padding the variable chunks, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

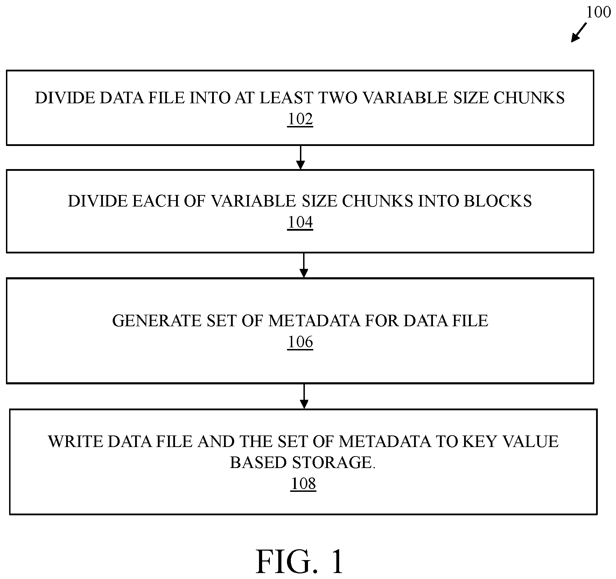

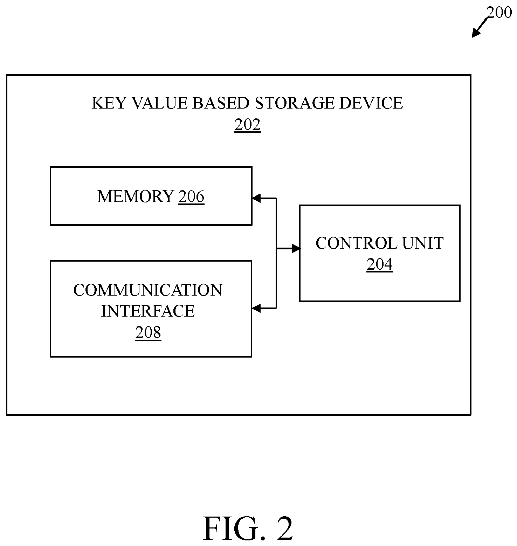

FIG. 1 is a flowchart of a method **100** for storage of a data file with metadata in a key value-based storage for achieving variable size deduplication, in accordance with an embodiment of the present disclosure. The method **100** is executed by a key value-based storage device described, for example, in Fig. 2. The method **100** includes steps **102, 104, 106** and **108.**

The method **100** is used for storage of the data file in the key value-based storage system. Alternatively stated, a block storage is used as the key value-based storage, where a key is a block address and if value (data value) is less than a block size, than the block can be padded with compressible data (e.g. padded with ones, or any other compressible characters). The data file refers to any electronic file that stores data to be used by a computer application or a database system, including I/O data. The key value-based storage refers to a storage that stores the data file using key-value entries. The key value-based storage supports accessing (reading and writing) data file by creating mapping between a key and corresponding value (i.e. data) in the data file and hence, provides a way to quickly and reliably store, retrieve, and update the data file in the key value-based storage. An implementation of the key value-based storage, such as a key value-based storage device, is described in detail, for example, in FIG. 2.

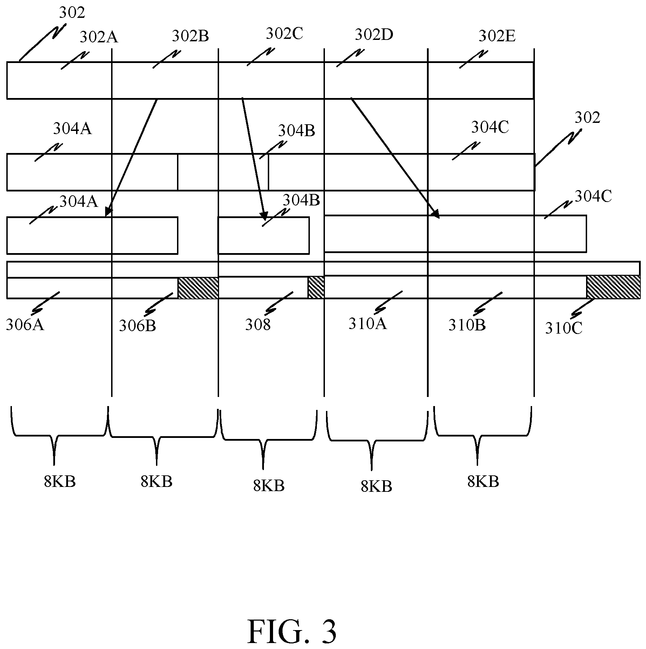

At step **102,** the method **100** comprises dividing the data file into at least two variable size chunks. The data file is divided into at least two variable size chunks such as a first chunk and a second chunk by a control unit (e.g. a processor) of the key value-based storage device. It is to be understood that the data file may be divided into multiple chunks, that is more than two chunks without limiting the scope of the disclosure. For the sake of brevity, at least two variable size chunks are used for explaining the method **100.** The average chunk size of the first chunk and the second chunk is larger than a given size of a fixed size block. For example, the size of fixed size block may be 8 kB, whereas the chunk size of the first chunk and the second chunk may be much larger than 8 kB, such as 20 kB and 13 kB respectively. The data file may be divided into at least two variable size chunks using known variable chunking method, such as content-defined chunking. The variable size chunks are stored in the key value-based storage device aligned to the fixed size block. An example of dividing the data file to variable sized chunks is shown and described in detail, for example, in FIG. 3.

At step **104,** the method **100** further comprises dividing each of the variable size chunks into blocks, wherein the blocks may have different sizes depending on the amount of data in each block. Each variable size chunks, such as the first chunk and the second chunk are divided into blocks by the control unit of the key value-based storage device. Generally, one block occupies a specific number of bytes of physical storage space in the block storage used as the key value-based storage, such as 4 kB block, 8 kB block, and the like. The block may be also referred to as a logical block. In this case, the size of each block depends on the amount of data in each block. For example, the first chunk of 20 kB may be divided into three blocks where two blocks are of size 8 kB and one block is of 4 kB. An example of dividing each of the variable size chunks into blocks is shown and described, for example, in FIG. 3.

In accordance with an embodiment, for one of the variable size chunks having a size m, the step of dividing it into blocks comprises dividing each chunk into blocks including n fixed size blocks having a fixed size k and one residue block having the size p, n being the result of an integer division of m/k and p being the remainder of the integer division. In a scenario, if size of the chunk, such as the first chunk is m and the first chunk is divided into blocks, then the first chunk is divided into n fixed size blocks of size k and one residue block of size p. The size p of the residual block is lesser than the size k of n fixed size blocks. For example, if the size of the first chunk is 20 kB (say, m=20 kB) and is divided into fixed size blocks of size 8 kB (say k=8), the fist chunk is divided into 2 (i.e. n=2) fixed size blocks by the integer division of 20/8 and one residual block of size 4 kB (i.e. p=4) determined by remainder of the integer division.

In accordance with an embodiment, the residue block is the last block in the variable size chunk. For example, if the first chunk of 20 KB is divided into a first block of 8 kB, a second block of 8kB and a third block of 4KB, the third block is the residue block.

Optionally, the residue block is stored in the key value-based storage with size less than the fixed size k. The k is 8 KB or a multiple of 8KB. For example, the fixed size k of n fixed size blocks may be 8 kB, 16 kB, 24 kB, and the like. In an implementation, the backend storage (e.g. a block storage that is used as the key value-based storage) allows storing blocks (i.e. small chunks) in the key value store, which are less than or equal to 8KB, and thus there is no need to leverage ones (or any other fixed character compressible padding) padding. In other words, the chunks are divided to block of size 8KB except the last block which is less than 8KB, which can be stored as an object with less than 8KB, saving the need to transfer (or transmit) ones (or any other fixed character padding) in I/O operations, such as random writes, thereby saving bandwidth.

In some conventional systems, because of the properties of conventional block storage systems, typically all blocks must have the same size, and therefore the last block of each chunk, if less than 8 kB is padded with trailing compressible trailer (e.g. ones or any other fixed character compressible padding) up to the standard size (typically 8 kB). In contradiction to such conventional systems, the method 100 is flexible and allows dividing each of the variable size chunks into blocks, wherein the blocks may have different sizes depending on the amount of data in each block, and there is no strict requirement to pad the last block of each chunk, if less than 8 kB with trailing compressible data to make it of standard block size, which improves bandwidth and saves the need to transfer (or transmit) zeros (or any other fixed character padding) in I/O operations, such as random writes, and in storage/backup activities. However, it is to be understood that, alternatively, the residue block can be padded with compressible data without limiting the scope of the disclosure, although such padding may decrease bandwidth.

At step **106,** the method **100** further comprises generating a set of metadata for the data file including information indicating the size of each block and the size of each chunk. The metadata for the data file is generated by the control unit of the key value-based storage device. The metadata includes information regarding the size of each block and the size of each chunk to allow random access of each block of the data file for random write/read operation. Based on the set of metadata for the data file, the data file is saved by using key-value entries. Hence, random access of each block and chunk are allowed by accessing the correct key-value entries. The metadata may further include information such as the data file name, the data file ID and other data file properties.

In accordance with an embodiment, the set of metadata also includes a first offset value indicating the start of the first block of the data file. The first offset value is a number of address locations from a base address in order to get to a specific absolute address of the first block of the data file. The first offset value that indicates the start of the first block (e.g. a metadata block) enables to understand where the actual data (e.g. all the 8KB of block data) is located in a chunk in the data file, which allows accurate random access even in variable sized chunks.

At step **108,** the method **100** further comprises writing the data file and the set of metadata to the key value-based storage. The writing of the data file to the key value-based storage is performed by the control unit of the key value-based storage device. The set of metadata represents a set of key value store entries, and random access is allowed by accessing the correct key. Thus, the set of metadata enables to understand where the actual data (e.g. all the 8 KB block data) is located, which allows accurate random access even in variable sized chunks.

In accordance with an embodiment, the method **100** further comprises performing deduplication on the at least two blocks based on the metadata information regarding the size of each block. The deduplication is performed by the control unit of the key value-based storage device to reduce duplicate data, if any in the data file (or other files in the key value-based storage device). In order to perform deduplication, blocks must have the same a) size and b) content. The deduplication is performed using the metadata information, such as size and key value entries of the at least two blocks. If content of a block is identical or even similar to prestored data of another block, the duplicate copy may not be stored by executing the deduplication. The deduplication may be executed as the data is being written into the key value-based storage or as a backend activity to eliminate duplicates after the data is written to key value-based storage. For example, a same chunk may be shared between two or more users, say logical unit 1 (LU1) and LU2. In such cases, the control unit (e.g. a processor) of the key value-based storage device may keep two key value entries to access the chunk, the same data entry is shared, and is thus deduplicated. The key points to the physical location of the data in the data file.

In conventional systems, in an example, if a data file of size 40 KB, is divided using fixed sized chunking, the file will have 5 fixed sized blocks of 8KB (may also be referred to as 8 kB chunks). Moreover, if in the same data file of 40 kB, if new data of one kB (1 KB) is added in the beginning of the first fixed size chunk, this change then will result in a second file (of 41 kB) that will have six fixed sized blocks (or 6 small chunks). Further, all the six fixed sized blocks (6 small chunks) will be different, for example, due to byte shifting, which will result in low deduplication ratios in case of fixed size deduplication as identical blocks cannot be found to execute deduplication.

In contradiction to conventional systems, if the same data file of 40 KB is divided using variable sized chunking (as described at step 104), for example, three variable sized chunks may be formed, such as chunk 1 of size 13 KB, chunk 2 of size 7 KB, and chunk 3 of size 20 KB. Further, in accordance with the method 100, in this example, each chunk may be divided into 8 KB blocks and a residue block. For example, chunk 1 of 13 kB is divided into 2 pieces (one block of 8KB of data, another block of 5KB of data without padding any compressible data at the end of the first block. Similarly, chunk 2 of 7 KB is divided into 1 piece (one block of 7 KB of data without any padding of zero to make it 8KB at the end). Lastly, chunk 3 of size 20 kB is divided into 3 pieces (one block of 8KB data, another block of 8KB data, and a residue block of 4KB of data). Thus, after variable size chunking, in this case, the data file has 6 chunks of 8KB (instead of 5 chunks as in fixed sized chunking). The data file then is stored as six key value pairs or entries (assuming the file id is 1): (1,0->o1); (1,8->o2); (1,16->o3); (1,24->o4); (1,32->o5); and (1,40->o6), where "1" represents file ID, "0,8,16,24,32,40" represents block size of 8 KB with corresponding offsets/gap of block size, and o1, o2, ...,o6 represents consecutive offsets. As each chunk has some space at end of residue block, even when new data is inserted, most of the chunks remains same allowing better deduplication like that of deduplication ratio achieved in a variable size deduplication. In the above example, in case of the variable sized chunking, now if 1 KB is added in the beginning, then only chunk 1 of 13 kB may become chunk 1' of 14 KB, which is different since it has now offset of 1KB), but this new data write of 1 KB will not spill to chunks 2 and 3, which are still identical leading to deduplication of the 4 blocks employed by chunks 2 and 3 (i.e. a higher deduplication ratio is achieved as compared to the conventional systems).

Furthermore, another issue is how to randomly access chunks of data in case of chunking a file to variable length pieces in the key value-based storage. In an example, when fixed size chunking is used random access is comparatively easy as the key to the data is the file ID plus the offset. But when chunking the data file to variable length chunks, an 8 KB fixed size chunk may include less than 8 KB of data (e.g. in the residue block where data less than 8KB can be stored even without zero padding, in this case). Thus, in order to do mapping (i.e. the mapping between a key and corresponding data value in the data file), a format of the data file may be modified. Moreover, in order to allow fast random writes, when a random write arrives to the data file, the random write will not be chunked by the variable size algorithm, but it will be written in place using a current chunking, as discussed below. In other words, the variable size chucking may occur only when the data file is created for the first time by a backup system, which ensures the performance of random writes to be similar to random writes performance as with the fixed size deduplication.

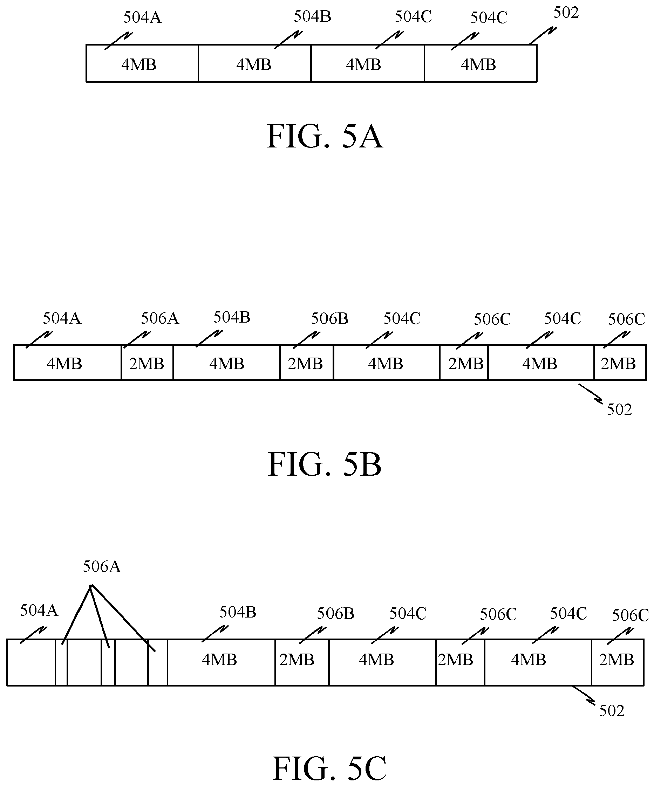

In accordance with an embodiment, the method 100 further comprises the steps of receiving a new sequence of data to be written to the data file, determining the offset and size of the new sequence of data and writing it to the data file based on the offset without changing the division into chunks and blocks. The new sequence of data is received by the control unit of the key value-based storage device. The new sequence of data is the new data (i.e. a subsequent write) that arrives to be written in the data file. The new sequence of data is written to the data file without being chunked for example, by the variable size algorithm. Rather, the new sequence of data is written based on its predetermined offset in the already chunked data file (e.g. using the metadata block). This allows faster random writes. An example of how to effectively configure a data file to be able to write the new sequence of data in the data file, is shown and described, for example, in FIGs. 5A-5C.

In accordance with an embodiment, the method **100** further comprises the steps of dividing the data file into at least two fixed size chunks (e.g. larger fixed sized chunks) having a fixed size x, independently of the division into variable size chunks and within each fixed size chunk, and when writing the data file to the key value storage, including padding for each fixed size chunk, said padding being positioned within the fixed size chunk and/or after the fixed size chunk. In this case, the data file is divided into at least two fixed size chunks, for example, the first chunk and the second chunk of size x. Additionally, padding (e.g. padding of compressible data) is added to each the first chunk and the second chunk so that adequate space is kept in each chunk to allow space for movement of the data while performing new writes in the data file. Hence, padding prevents data spilling between different chunks (e.g. the first chunk and the second chunk) when performing new writes, avoids re-copying of entire data file, and thus, makes writing the data file faster. In an implementation, the padding may be added within each of the divided chunks. In another implementation, padding may be added in some chunks, while some chunks may not be padded with compressible data depending on how much new data writes is expected to be written in the data file. In an example, if a 16 megabyte (MB) chunk is divided into four 4 MB chunks, almost 50% of data may be padded with compressible data, that is 2MB of padding for each 4MB chunks, which is further described in detail, for example, in FIGs. 5A-5C.

In accordance with an embodiment, the padding for each fixed size chunk is added to a total chunk size of (1+ n/y)*x, where n is the size of the fixed size blocks, y is the average size of the variable size chunks and x is the size of the fixed size chunks. The size of the fixed size chunk (i.e. x) may grow in size due to adding padding within the data file. The data file can maximum grow to size of (1+ n/y)*x due to the padding. There, n represents the size of the fixed size blocks (e.g. n may be 8 KB), y represents average chunk size of fixed size blocks and x represents size of the fixed size chunks (assuming the average is forced to be kept in each such 4MB fixed size chunk). For example, if the size of the fixed size chunks (denoted by x) is 4 megabytes, average chunk size of the fixed size blocks (chuck size denoted by y) is 16 kB and the size of the fixed size blocks (represented by n) is 8 kB, each chunk will be padded with at most 8 kB of zeros. So, for every 16 kB of data, we add 8 kB of data, i.e. the zeros are at most 50% of the data. Hence, the block of 4 MB will grow to a maximum of 6 MB. The padding is done within the fixed size chunk and/or after the fixed size chunk so that the at least two fixed size chunks have adequate space for data movements when new write data is received, and that there is no chance of data spilling between at least two fixed size chunks. An example of the data file that includes padding is shown and described, for example, in FIGs. 5A-5C.

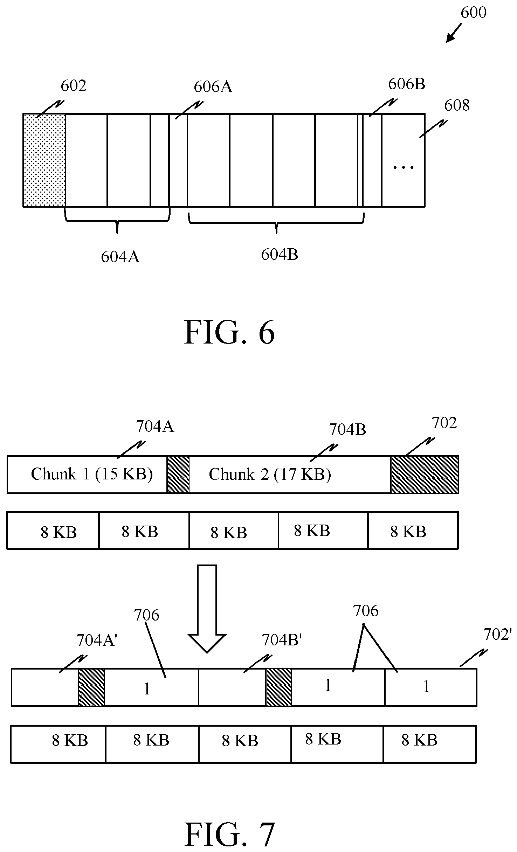

In accordance with an embodiment, each fixed size chunk comprises metadata indicating an offset of data in the fixed size chunk to allow random access to the data in the file. In order to allow accessing of data in the data file in random access, each chunk comprises metadata, which is stored in the first block referred to as a metadata block at the beginning of each of fixed size chunks. For example, if the size of a chunk in a data file is 4 MB and is divided into 8 KB blocks then, the chunk will be divided into 512 8KB blocks. Given the possibility chunking or re-chunking a given chunk at every backup update, the metadata that indicates the offset of data allows understanding where all 512 8 KB blocks are located in the chunk and overall, the data file. An example a data structure of chunk with metadata block is further described, for example, in FIG. 6.

In accordance with an embodiment, the method **100** further comprises the step of writing the data file to the key value storage includes, for each variable size chunk in the file having a size y: compressing the variable size chunk to a size smaller than y, writing the compressed variable chunk to the storage and padding the variable chunk up to the size y rounded to the block size. In a scenario, the data file of each variable size chunk may have a size represented by y is such compressed that the size of the variable size chunk is compressed to lesser than y. For example, a variable size chunk of size 15 kB (i.e. y) is compressed to a variable size chunk of size 7 kB. Therefore, in order to be able to write to the compressed variable size chunk of size smaller than y, the compressed variable chunk data may be padded with compressible data so that the size of variable chunk data after compression is the same as before compression (i.e. y). For example, a variable size chunk of size 15 kB after compression is padded with ones as ones compress very well (or other known compressible characters) so that size of the variable size chunk becomes 15 kB (i.e. same as size of the variable size chunk before compression). Moreover, one of the advantages of the variable size chunking format is that an external (or different) compression algorithm may be used and leveraged than only using an existing internal storage compression algorithm in the key value-based storage (e.g. a block storage used as the key value-based storage). As the variable length deduplication is effectively deployed in the method **100,** each chunk (which may be typically larger than 8 KB, for example, 16KB or about 32 KB), can be compressed with higher deduplication ratios.

In accordance with an embodiment, a block storage is used as the key value storage, using the block address as the key, comprising the step of padding the block storage with compressible data up to the block size. The block storage refers to a hardware storage that supports reading and writing data in fixed-size blocks, sectors, or clusters. The block storage uses the block address as the key to randomly access the blocks of the data file stored in the block storage. Further, the block storage pads the compressed variable chunk data with compressible data (e.g. ones or any other fixed compressible character) so that the size of variable chunk data after compression is same as before compression to enable writing to the compressed variable size chunk.

FIG. 2 is a block diagram that illustrates various exemplary components of a key value-based storage device, in accordance with another embodiment of the present disclosure. FIG. 2 is described in conjunction with FIG. 1. With reference to FIG. 2, there is shown a key value-based storage system **200,** which may comprise one or more the key value-based storage devices, such the key value-based storage device **202.** The key value-based storage device **202** comprises a control unit **204.** The key value-based storage device **202** further comprises a memory **206** and a communication interface **208.**

The key value-based storage device **202** refers to a storage that stores the data file using key-value entries. The key value-based storage device **202** supports accessing (reading and writing) data file by creating mapping between a key and corresponding value (i.e. data) in the data file and hence, provides a way to quickly and reliably store, retrieve, and update the data file. In an implementation, a block storage at the backend may be used and implemented as the key value-based storage device **202.** The key value-based storage device **202** includes suitable logic, circuitry, interfaces, and/or code that is configured to store and process the data. Other examples of the key value-based storage device **202** include, but is not limited to a server, a secondary storage, a block-storage based computing device in a computer cluster (e.g. massively parallel computer clusters), a block-storage based electronic device, or a supercomputer.

The control unit **204** refers to a controller that is configured to control the writing of the data to the key value-based storage device **202.** In an implementation, the control unit **204** is configured to execute control instructions stored in the memory **206** for controlling writing of the data to the key value-based storage device **202.** Examples of the control unit **204** includes, but are not limited to a control circuitry, microprocessor, a microcontroller, a complex instruction set computing (CISC) microprocessor, a reduced instruction set (RISC) microprocessor, a very long instruction word (VLIW) microprocessor, a central processing unit (CPU), a state machine, a data processing unit, and other processors or control circuitry.

The memory **206** refers to key value-based storage and may include suitable logic, circuitry, and interfaces that may be configured to store data and the instructions executable by the control unit **204.** The memory **206** may also include other known components, such as disk head, and the like, used to read and write data (not shown for the sake of brevity). Examples of implementation of the memory **206** may include, but are not limited to, a Hard Disk Drive (HDD), Solid-State Drive (SSD), a back-up storage disk, a block storage unit, or other computer storage media. The memory **206** may store an operating system and/or other program products (including one or more operation algorithms) to operate the key value-based storage device **202.**

The communication interface **208** refers to a network interface or a transceiver that is configured to facilitate data communication to and from the key value-based storage device **202.** The communication interface **208** may support communication protocols for Internet Small Computer Systems Interface (iSCSI), fibre channel, or Fibre Channel over Ethernet (FCoE) protocols. The communication interface **208** may also support communication protocols for one or more of peer-to-peer network, a hybrid peer-to-peer network, local area networks (LANs), metropolitan area networks (MANS), wide area networks (WANs), all or a portion of a public network such as the global computer network known as the Internet, a private network, or any other communication system or systems at one or more locations. Additionally, the communication interface **208** supports wired or wireless communication that can be carried out via any number of known protocols, including, but not limited to, Internet Protocol (IP), Wireless Access Protocol (WAP), Frame Relay, or Asynchronous Transfer Mode (ATM). Moreover, any other suitable protocols using voice, video, data, or combinations thereof, can also be employed and supported by the communication interface **208.**

In one aspect, the present disclosure provides the key value-based storage device **202** comprises the control unit **204** for controlling the writing of data to the key value-based storage device **202.** The control unit **204** controls writing of the data to the key value-based storage device **202** by executing control instructions stored in the memory **206** for controlling writing of the data to allow random write operation in the data file.

In operation, the control unit **204** for the key value-based storage device **202** for storing a data file, said control unit **204** being arranged to perform steps for a data file being stored in the storage device **202.** The control unit **204** divides the data file into at least two variable size chunks. The data file is divided into at least two variable size chunks such as a first chunk and a second chunk by the control unit **204** of the key value-based storage system **200.** Further, the size of the first chunk and the second chunk is different from each other. The average chunk size of the first chunk and the second chunk is larger than a given size of fixed size blocks. For example, the size of fixed size block may be 8 kB, whereas the chunk size of the first chunk and the second chunk much larger than 8 KB.

The control unit **204** further divide each of the variable size chunks into blocks, wherein the blocks may have different sizes depending on the amount of data in each block. Each variable size chunks, such as the first chunk and the second chunk are divided into blocks by the control unit **204** of the key value-based storage device **202.** An example of dividing each of the variable size chunks into blocks is shown and described, for example, in FIG. 3.

In accordance with an embodiment, the control unit **204** is arranged to divide one of the variable size chunks having a size m, by dividing each chunk into n blocks having a fixed size k and one residue block having the size p, n being the result of an integer division of m/k and p being the remainder of the integer division. For example, if the size of the first chunk is 20 kB (say, m=20 kB) and is divided into fixed size blocks of size 8 kB (say k=8), the fist chunk is divided into 2 (i.e. n=2) fixed size blocks by the integer division of 20/8 and one residual block of size 4 kB (i.e. p=4) determined by remainder of the integer division.

In accordance with an embodiment, the control unit **204** is arranged to place the residue block as the last block in the variable size chunk. For example, if the first chunk of 20 KB is divided into a first block of 8 kB, a second block of 8kB and a third block of 4KB, the third block is the residue block. The control unit **202** is configured to store blocks (i.e. small chunks) in the memory **206,** which are less than or equal to 8KB, and thus there is no need to leverage compressible data padding (or any other fixed character compressible padding) padding. In other words, the chunks are divided to block of size 8KB except the last block which is less than 8KB, which can be stored as an object with less than 8KB, saving the need to transfer (or transmit) zeros (or any other fixed character padding) in I/O operations, such as random writes, thereby saving bandwidth.

The control unit **204** further generate a set of metadata for the data file including information indicating the size of each block and the size of each chunk. The metadata includes information regarding the size of each block and the size of each chunk to allow random access of each block of the data file for random write/read operation. Based on the set of metadata for the data file, the data file is saved by using key-value entries. Hence, random access of each block and chunk are allowed by accessing the correct key-value entries. The metadata may further include information such as the data file name, the data file ID and other data file properties.

The control unit **204** further enables writing the data file and the set of metadata to the key value-based storage **202.** The set of metadata represents a set of key value store entries, and random access is allowed by accessing the correct key. Thus, the set of metadata enables to understand where the actual data (e.g. all the 8 KB block data) is located, which allows accurate random access even in variable sized chunks.

In accordance with an embodiment, the control unit **204** is further arranged to perform deduplication on the at least two blocks based on the metadata information regarding the size of each block. The deduplication is performed by the control unit **204** of the key value-based storage device **202** to reduce duplicate data in the data file.

In accordance with an embodiment, the control unit **204** is further arranged to receive a new sequence of data to be written to the data file, determine the offset and size of the new sequence of data and write it to the data file based on the offset without changing the division into chunks and blocks. An example of how to effectively configure a data file to be able to write the new sequence of data in the data file, is shown and described, for example, in FIGs. 5A-5C.

In accordance with an embodiment, the control unit **204** is further arranged to divide (or configured to divide) the data file into at least two fixed size chunks having a fixed size x, independently of the division into variable size chunks and within each fixed size chunk, and when writing the data file to the key value storage, including padding for each fixed size chunk, said padding being positioned within the fixed size chunk and/or after the fixed size chunk. The various embodiments, operations, and variants disclosed in the method **100** of FIG. 1 apply mutatis mutandis to the key value-based storage device **202.**

A computer program product comprising computer-readable code which when run in the control unit **204** controlling the key value-based storage device **202** will control (i.e. is configured to control) the writing of the data file to the key value-based storage device **202** by performing the method **100.** The computer program product may include, but is not limited to, an electronic storage device, a magnetic storage device, an optical storage device, an electromagnetic storage device, a semiconductor storage device, or any suitable combination of the foregoing. In yet another aspect, the present disclosure provides a computer program adapted to perform the method **100** by a device (e.g. the key value-based storage device **202).**

In accordance with an embodiment, the computer program product comprising a non-transitory storage on which the code is stored. The non-transitory computer-readable storage medium has computer-readable instructions being executable by a processor to execute the method **100.** Examples of implementation of the non-transitory computer-readable storage medium include, but is not limited to, Electrically Erasable Programmable Read-Only Memory (EEPROM), Read Only Memory (ROM), Hard Disk Drive (HDD), Flash memory, a Secure Digital (SD) card, Solid-State Drive (SSD), or a computer readable storage medium.

FIG. 3 is an exemplary illustration of chunking a data file for achieving variable size deduplication, in accordance with an embodiment of the present disclosure. FIG. 3 is described in conjunction with elements from FIGs. 1 and 2. With reference to FIG. 3, there is shown a data file **302.** In the present disclosure, the data file **302** is divided into variable size chunks using variable size chunking algorithms, such that the data file **302** is divided into a first variable size chunk **304A,** a second variable size chunk **304B** and a third variable size chunk **304C.** For example, if the size of the data file **302** is 40 kB, the size of the first variable size chunk **304A** is 13 kB, the size of the second variable size chunk **304B** is 7 kB and the size of the third variable size chunk **304C** is 20 kB. Further, each of the first variable size chunk **304A,** the second variable size chunk **304B** and the third variable size chunk **304C** is divided into blocks of fixed size 'k' and one residual block. The size of the residual block is lesser than fixed size 'k'. For example, if the fixed size 'k' is 8 kB then, the first variable size chunk **304A** is divided into a first block **306A** of size 8 kB and a second block **306B** of size 5 kilobytes. Further, the second variable size chunk **304B** is divided into one block, such as a first block **308** of size 7 kB. Furthermore, the third variable size chunk **304C** is divided into a first block **310A** of size 8 kB, a second block **310B** of size 8 kB and a third block **310C** of size 4 kB. The data file **302** may be stored as a set of key-value pairs. For example, the first block **306A** of the first variable size chunk **304A** is stored as (1,0->o1), the second block **306B** of the first variable size chunk **304A** is stored as (1,8->o2), the first block **308** of the second variable size chunk **304B** is stored as (1,16->o3), the first block **310A** is stored as (1,24->o4), the second block **310B** is stored as (1,32->o5) and the third block **310C** of the third variable size chunk **304C** is stored as (1,40->o6).

In contradiction to such conventional systems, the control unit **204** allows dividing each of the variable size chunks **304A, 304B,** and **304C** into blocks **306A, 306B, 308, 310A,** and **310B,** wherein the blocks **306A** and **310A** have same size except the residue blocks, such as blocks **306B, 308,** and **310B** (last block of each chunk), and there is no strict requirement to pad the last block of each chunk, if less than 8 kB with trailing compressible data to make it of standard block size, which improves bandwidth and saves the need to transfer (or transmit) ones (or any other fixed character padding) in I/O operations, such as random writes, and in storage/backup activities. However, it is to be understood that it is possible to perform padding the residue block with compressible data without limiting the scope of the disclosure, although such padding may decrease bandwidth.

Conventionally, the data file **302** is typically divided using a fixed size chunking, such that the data file **302** is divided into a first chunk **302A,** a second chunk **302B,** a third chunk **302C,** a fourth chunk **302D** and a fifth chunk **302E** of fixed size. For example, if the size of the data file is 40 kB then there are only five blocks of size of 8 kB.

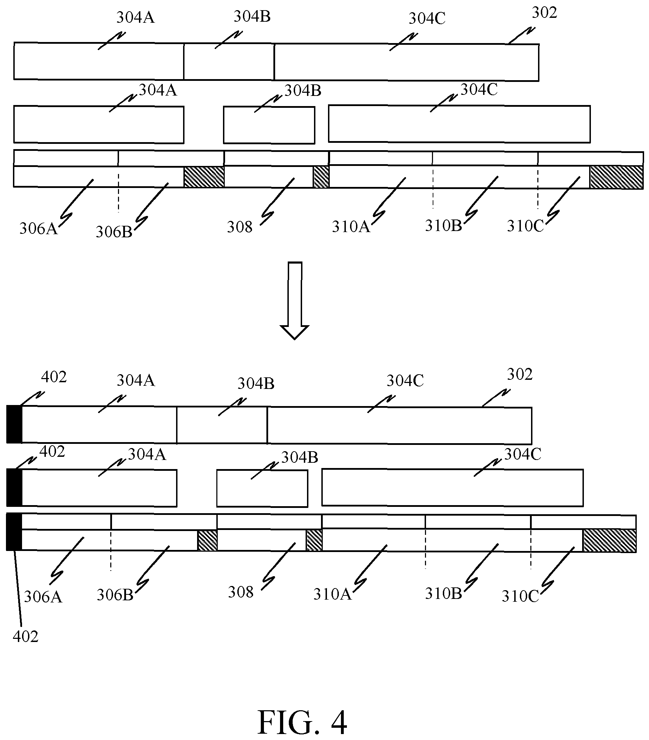

FIG. 4 is an exemplary illustration of operation of a data insertion at the start of a data file that is divided into variable sized chunks, in accordance with an embodiment of the present disclosure. FIG. 4 is described in conjunction with elements from FIGs. 1, 2, and 3. With reference to FIG. 4, there is shown the data file **302.** The data file **302** is divided into the first variable size chunk **304A** of size 13 kB, the second variable size chunk **304B** of size 7 kB and the third variable size chunk **304C** of size 20 kB. The variable size chunks **304A, 304B,** and **304C** are stored in the key value-based storage device **202** (e.g. a block storage used as the key value-based storage) aligned (i.e. byte aligned) to 8KB storage space (represented by patterned blocks of equal size). The control unit **204** allows dividing each of the variable size chunks **304A, 304B,** and **304C** into blocks **306A, 306B, 308, 310A, 310B,** and **310C,** wherein the blocks **306A, 310A, 310B** have same size of 8KB except the residue blocks, such as blocks **306B, 308,** and **310C** (last block of each chunk) that are less than 8KB.

In this case, when new data **402** (e.g. 1 kB data) is inserted at the beginning of the data file **302,** the size of the data file **302** changes to 41 kB, and only the size of the first variable size chunk **304A** increases by size of the new data insert (i.e. of 1 kB). For example, the size of the first variable size chunk **304A** increases to 14 kB from 13 kB. This leads to change in the first block **306A** and the second block **306B** of the first variable size chunk **304A.** However, the size of the second variable size chunk **304B** and the third variable size chunk **304C** remains the same. For example, the size of the second variable size chunk **304B** and the third variable size chunk **304C** remains 7 kB and 20 kB respectively. Hence, the block **308** of the second variable size chunk **304B;** and the first block **310A,** the second block **310B** and the third block **310C** of the third variable size chunk **304C** remains the same and thus, deduplication of the second variable size chunk **304B** and the third variable size chunk **304C** can be done and a higher deduplication ratio can be achieved.

Moreover, for effective deduplication, the variable size chucking may occur only when the data file **302** is created for the first time by a backup system, which ensures the performance of random writes to be similar to random writes performance as with the fixed size deduplication. However, on subsequent write of larger data, for example, 8 kB or more than 8 kB, to the data file **302,** the additional subsequent wites may be overwritten to existing blocks of data, and thus avoided. For example, in the FIG. 4, after the data file **302** is written in the key value-based storage device **202** once and variably chunked once, and a subsequent random write to offset 16KB and size 8KB arrives, then the new data may be overwritten to the last 3 KB of the block **308** and the first 5KB of the first block **310A** (which is the beginning of the third variable size chunk **304C),** which is not desirable.

In a backup scenario, it is desired that the data file **302** chunking is updated upon every backup. However, the problem of re-chunking the data is that due to new holes (i.e. locations padded with compressible data, or new blocks inserted which have object size of less than 8KB), a file may not be large enough to store all the data, and the data of whole file may need to shifted from original block locations (e.g. a right byte shifting in block storage), meaning we need to re-copy (i.e. rewrite) the whole file. In other words, for subsequent write operations, another effective and improved mechanism may be employed by using smart file format, described below in FIG. 5A to 5C.

FIG. 5A-5C are exemplary illustrations of configuring a data file to allow writing a new sequence of data in the data file without data spilling between different chunks, in accordance with an embodiment of the present disclosure. With reference to FIG. 5A, there is shown the data file **502.** The data file **502** is divided into a first chunk **504A,** a second chunk **504B,** a third chunk **504C** and a fourth chunk **504D.** For example, the size of the data file **502** is 16MB (data stored in one large data file) and the size of each of the first chunk **504A,** the second chunk **504B,** the third chunk **504C** and the fourth chunk **504D** is 4 MB.

With reference to FIG. 5B, there is shown the data file **502** with the padding within the fixed size chunks. In other words, a first padding **506A** is added within the first chunk **504A** (i.e. at the end of the first chunk **504A,** which implies padding between the first chunk **504A** and the second chunk **504B).** similarly, a second padding **506B** is added within the second chunk **504B** (which implies padding between the second chunk **504B** and the third chunk **504C).** Likewise, third padding **506C** and the fourth padding **506D** are added to their corresponding chunks, as shown. Further, size of each of the first padding **506A,** the second padding **506B,** the third padding **506C** and the fourth padding **506D** is kept about 50% of the size of each of the first chunk **504A,** the second chunk **504B,** the third chunk **504C** and the fourth chunk **504D.** For example, the size of the first chunk **504A,** the second chunk **504B,** the third chunk **504C** and the fourth chunk **504D** is 4 MB each then, the size of each of the first padding **506A,** the second padding **506B,** the third padding **506C** and the fourth padding **506D** is 2 MB. The first padding **506A,** the second padding **506B,** the third padding **506C** and the fourth padding are added to allow variable size chunking in subsequent writes without the need to rewrite the data file **502.**

With reference to FIG. 5C, there is shown the data file **502** in which the first chunk **504A** includes the padding **506A.** Since, size of the first chunk **504A** is big enough, the first chunk **504A** did not spill to the second chunk **504B** after variable size chunking. Hence, the first chunk **504A** can be re-chunked granularly without affecting any other part of the data file **502,** that is without affecting the second chunk **504B,** the third chunk **504C** and the fourth chunk **504D** and thus avoids rewrite of the whole data file **502.** In another example, if a virtual machine is backed-up, on consecutive backups, re-chunking of only one big chunk (e.g. the 4MB big chunk) which had change, can be executed, and this allows us to keep the variable size chunking. The metadata for the offsets of the chunk ends can be kept in the first 8KB (i.e. beginning block) of each such big chunks, such as the 4MB chunks in this example. In other words, in order to allow accessing the data file **502** in random access, metadata block is added at the beginning of each large chunk, where the metadata indicates a mapping from offset (of data blocks) in the logical chunk (e.g. the 4MB chunk) stored in the next big chunk.

FIG. 6 is an illustration of an exemplary data structure of a chunk with a metadata block at a beginning of the chunk, in accordance with an embodiment of the present disclosure. With reference to FIG. 6, there is shown a data structure **600** of a chunk (e.g. a 4 MB big chunk) of a large data file. The data structure **600** of the chunk include a metadata block **602,** blocks **604A** and **604B** containing data and patterned portions **606A** and **606B** indicate holes (e.g. remaining non-data portion of residue blocks without padding, or padding in some use cases). Further, a portion **608** at the end of the chunk indicates that the data structure **600** of the chunk is a 4MB data containing chunk in a 6 MB sparse address space (with 2 MB padding).

In this example, a part of the original data file (e.g. data file **502)** starts at offset which is multiple of 4MB. For metadata, it is searched only at the beginning of the chunk (e.g. 4MB chunk), and the data in the chunk which was originally 7 blocks and 54KB, may be chunked to first chunk of 20KB and second chunk of 34 KB (3rd chunk not shown here, but its size may be say 26KB). Now, in this example, the metadata header in the metadata block 602 for 7 data blocks may be the following, in an example.
1. Block 0 - points to block 0, start offset 0, next chunking point is at sparse block 2 at offset 4KB;
2. Block 1 - points to block 1, start offset 0, next chunking point is at sparse block 2 at offset 4KB;
3. Block 2 - points to block 2, start offset 0, next chunking point is at sparse block 2 at offset 4KB;
4. Block 3 - points to block 3, start offset 4KB, next chunking point is at sparse block 7 at offset 2KB;
5. Block 4 - points to block 4, start offset 4KB, next chunking point is at sparse block 7 at offset 2KB;
6. Block 5 - points to block 5, start offset 4KB, next chunking point is at sparse block 7 at offset 2KB;
7. Block 6 - points to block 6, start offset 4KB, next chunking point at sparse block 7 at offset 2KB.

As the 4MB of data contain 512 8KB blocks, each pointer will point the location where the block starts, i.e. a block number in the 6 MB sparse block (2 bytes), what offset inside the block it starts (2 bytes), and the location of the next chunk in the chunking algorithm, this data allows understanding where all the 8KB of data is located (which can be in 1-3 blocks/objects in the sparse representation) for accurate random access of data in the data file/chunks of data file. Thus, the metadata header (i.e. the metadata block **602** of 8KB) may be divided into about 512, 16 bytes pointers (512*16=8192 bytes, i.e. ~8KB).

FIG. 7 is an illustration that depicts exemplary operations of writing compressed variable chunks to a storage and padding the variable chunks, in accordance with an embodiment of the present disclosure. With reference to FIG. 7, there is shown a data file **702A,** for example, of 32 kB, which is chunked to two variable sized chunks, such as first variable size chunk **704A** of 15 kB and a second variable size chunk **704B** of 17 kB. The chunks may be further divided into blocks of different sizes depending on the amount of data in each block before compression, and are byte aligned to fixed size blocks each of 8 kB, where patterned portions in residue block indicate holes (e.g. 1 kB less than 8 kB). The chunks, such as the first variable size chunk **704A** of 15 kB and the second variable size chunk **704B** of 17 kB, may be compressed separately and these may compress to 7 KB, such as a compressed first variable size chunk **704A'** and a compressed second variable size chunk **704B'** as shown in the compressed data file **702'.** There is further shown compressible data **706** that is padded to each chunk in the compressed data file **702'.**

In contradiction to conventional systems, each of the chunks after compression is padded with compressible data **706** so that size of the variable size chunks is same after compression as of the variable size chunks before compression. This avoids the problem of rewriting the whole file when there is new data, which is then not further compressible. In other words, beneficially, in order to be able to write compressible data in place accurately, the compressed data of each chunk is padded with the compressible data **706** (e.g. ones or fixed compressible character) so that the size of data file **702'** after compression is the same as the size of data file **702** before compression. Hence, in this case, the first variable size chunk **704A** and the second variable size chunk **704B** is padded with ones (also represented by "1"). Moreover, there may be blocks which are completely empty but when new data is written to the data file **702'** in random access, the key value-based storage device **202** writes the data in proper place, for example, at padded portions. Hence, writing of mew data in the data file **702'** is done without any need of rewriting the whole data file **702.**

## Claims

1. A method (100) of storing a data file (302, 502, 702) in a key value-based storage system (200) comprising the steps of
- dividing the data file (302, 502, 702) into at least two variable size chunks,
- dividing each of the variable size chunks into blocks, wherein the blocks may have different sizes depending on the amount of data in each block and wherein, for one of the variable size chunks having a size m, the step of dividing it into blocks comprises dividing each chunk into blocks including n fixed size blocks having a fixed size k and one residue block having the size p, n being the result of an integer division of m/k and p being the remainder of the integer division,
- generating a set of metadata for the data file (302, 502, 702) including information indicating the size of each block and the size of each chunk,
- writing the data file (302, 502, 702) and the set of metadata to the key value-based storage.

2. The method (100) according to claim 1, wherein the residue block is the last block in the variable size chunk.

3. The method (100) according any one of the preceding claims, comprising the step of
- performing deduplication on the at least two blocks based on the metadata information regarding the size of each block.

4. The method (100) according to any one of the preceding claims, comprising the steps of receiving a new sequence of data to be written to the data file (302, 502, 702), determining the offset and size of the new sequence of data and writing it to the data file (302, 502, 702) based on the offset without changing the division into chunks and blocks.

5. The method (100) according to any one of the preceding claims, wherein k is 8 KB or a multiple of 8 KB.

6. The method (100) according to any one of the preceding claims, wherein the set of metadata also includes a first offset value indicating the start of the first block of the data file (302, 502, 702).

7. The method (100) according to any one of the preceding claims, comprising the steps of dividing the data file (302, 502, 702) into at least two fixed size chunks having a fixed size x, independently of the division into variable size chunks and within each fixed size chunk, and when writing the data file (302, 502, 702) to the key value storage, including padding for each fixed size chunk, said padding being positioned within the fixed size chunk and/or after the fixed size chunk.

8. The method (100) according to claim 7, wherein the padding for each fixed size chunk is added to a total chunk size of (1+ n/y)*x, where n is the size of the fixed size blocks, y is the average size of the variable size chunks and x is the size of the fixed size chunks.

9. The method (100) according to claim 7 or 8, wherein each fixed size chunk comprises metadata indicating an offset of data in the fixed size chunk to allow random access to the data in the file.

10. The method (100) according to claim 1, wherein the step of writing the data file (302, 502, 702) to the key value storage includes, for each variable size chunk in the file having a size y: compressing the variable size chunk to a size smaller than y, writing the compressed variable chunk to the storage and padding the variable chunk up to the size y rounded to the block size.

11. The method (100) according to any one of the preceding claims, wherein a block storage is used as the key value storage, using the block address as the key, comprising the step of padding the block storage with compressible data up to the block size.

12. A control unit (204) for a key value-based storage device (202) for storing a data file (302, 502, 702), said control unit (204) being arranged to perform the following steps for a data file (302, 502, 702) being stored in the storage device (202):
- divide the data file (302, 502, 702) into at least two variable size chunks
- divide each of the variable size chunks into blocks, wherein the blocks may have different sizes depending on the amount of data in each block, wherein the control unit (204) is arranged to divide one of the variable size chunks having a size m, by dividing each chunk into n blocks having a fixed size k and one residue block having the size p, n being the result of an integer division of m/k and p being the remainder of the integer division,
- generate a set of metadata for the data file (302, 502, 702) including information indicating the size of each block and the size of each chunk
- writing the data file (302, 502, 702) and the set of metadata to the key value-based storage.

13. The control unit (204) according to claim 12, control unit (204) is arranged to place the residue block as the last block in the variable size chunk.

14. The control unit (204) according to any one of the claims 12 - 13, wherein the control unit (204) is further arranged to perform deduplication on the at least two blocks based on the metadata information regarding the size of each block

15. The control unit (204) according to any one of the claims 12 - 13, wherein the control unit (204) is further arranged to receive a new sequence of data to be written to the data file (302, 502, 702), determine the offset and size of the new sequence of data and write it to the data file (302, 502, 702) based on the offset without changing the division into chunks and blocks.

16. A key value-based storage device (202) arranged to store a data file (302, 502, 702), said key value-based storage device (202) comprising a control unit (204) according to any one of the claims 12 - 15, for controlling the writing of data to the key value-based storage device (202).

17. A computer program product comprising computer-readable code which when run in a control unit controlling a key value-based storage device (202) will control the writing of the data file (302, 502, 702) to the key value-based storage device by (202) performing the method according to any one of the claims 1 - 11.

18. A computer program product according to claim 17, comprising a non-transitory storage on which the code is stored.

## Patentansprüche

1. Verfahren (100) zum Speichern einer Datendatei (302, 502, 702) in einem schlüsselwertbasierten Speichersystem (200), umfassend die folgenden Schritte
- Unterteilen der Datendatei (302, 502, 702) in mindestens zwei Chunks variabler Größe,
- Unterteilen jedes der Chunks variabler Größe in Blöcke, wobei die Blöcke abhängig von der Datenmenge in jedem Block unterschiedliche Größen aufweisen können und wobei für eines der Chunks variabler Größe, das eine Größe m aufweist, der Schritt des Unterteilens desselben in Blöcke ein Unterteilen jedes Chunks in Blöcke umfasst, die n Blöcke fester Größe, die eine feste Größe k aufweisen, und einen Restblock, der die Größe p aufweist, beinhalten, wobei n das Ergebnis einer ganzzahligen Division von m/k ist und p der Rest der ganzzahligen Division ist,
- Erzeugen eines Satzes von Metadaten für die Datendatei (302, 502, 702), der Informationen beinhaltet, die die Größe jedes Blocks und die Größe jedes Chunks angeben,
- Schreiben der Datendatei (302, 502, 702) und des Satzes von Metadaten in den schlüsselwertbasierten Speicher.

2. Verfahren (100) nach Anspruch 1, wobei der Restblock der letzte Block in dem Chunk variabler Größe ist.

3. Verfahren (100) nach einem der vorhergehenden Ansprüche, umfassend den folgenden Schritt
- Durchführen einer Deduplizierung an den mindestens zwei Blöcken basierend auf den Metadateninformationen hinsichtlich der Größe jedes Blocks.

4. Verfahren (100) nach einem der vorhergehenden Ansprüche, umfassend die Schritte eines Empfangens einer neuen Datensequenz, die in die Datendatei (302, 502, 702) zu schreiben ist, eines Bestimmens des Versatzes und der Größe der neuen Datensequenz und eines Schreibens derselben in die Datendatei (302, 502, 702) basierend auf dem Versatz ohne ein Ändern der Unterteilung in Chunks und Blöcke.

5. Verfahren (100) nach einem der vorhergehenden Ansprüche, wobei k 8 KB oder ein Vielfaches von 8 KB ist.

6. Verfahren (100) nach einem der vorhergehenden Ansprüche, wobei der Satz von Metadaten auch einen ersten Versatzwert beinhaltet, der den Beginn des ersten Blocks der Datendatei (302, 502, 702) angibt.

7. Verfahren (100) nach einem der vorhergehenden Ansprüche, umfassend die Schritte eines Unterteilens der Datendatei (302, 502, 702) in mindestens zwei Chunks fester Größe, die eine feste Größe x aufweisen, unabhängig von der Unterteilung in Chunks variabler Größe und innerhalb jedes Chunks fester Größe, und, wenn die Datendatei (302, 502, 702) in den schlüsselwertbasierten Speicher geschrieben wird, eines Beinhaltens einer Auffüllung für jeden Chunk fester Größe, wobei die Auffüllung innerhalb des Chunks fester Größe und/oder nach dem Chunk fester Größe positioniert ist.

8. Verfahren (100) nach Anspruch 7, wobei die Auffüllung für jeden Chunk fester Größe zu einer Chunk-Gesamtgröße von (1+n/y)*x hinzugefügt wird, wobei n die Größe der Blöcke fester Größe ist, y die Durchschnittsgröße der Chunks variabler Größe ist und x die Größe der Chunks fester Größe ist.

9. Verfahren (100) nach Anspruch 7 oder 8, wobei jeder Chunk fester Größe Metadaten umfasst, die einen Versatz von Daten in dem Chunk fester Größe angeben, um einen Direktzugriff auf die Daten in der Datei zu ermöglichen.

10. Verfahren (100) nach Anspruch 1, wobei der Schritt des Schreibens der Datendatei (302, 502, 702) in den schlüsselwertbasierten Speicher für jeden Chunk variabler Größe in der Datei, der eine Größe y aufweist, beinhaltet: Komprimieren des Chunks variabler Größe auf eine Größe, die kleiner als y ist, Schreiben des komprimierten variablen Chunks in den Speicher und Auffüllen des variablen Chunks bis zu der Größe y, gerundet auf die Blockgröße.

11. Verfahren (100) nach einem der vorhergehenden Ansprüche, wobei ein Blockspeicher als der schlüsselwertbasierte Speicher verwendet wird, unter Verwendung der Blockadresse als den Schlüssel, umfassend den Schritt eines Auffüllens des Blockspeichers mit komprimierbaren Daten bis zu der Blockgröße.

12. Steuereinheit (204) für eine schlüsselwertbasierte Speichervorrichtung (202) zum Speichern einer Datendatei (302, 502, 702), wobei die Steuereinheit (204) eingerichtet ist, um die folgenden Schritte für eine Datendatei (302, 502, 702) durchzuführen, die in der Speichervorrichtung (202) gespeichert wird:
- Unterteilen der Datendatei (302, 502, 702) in mindestens zwei Chunks variabler Größe
- Unterteilen jedes der Chunks variabler Größe in Blöcke, wobei die Blöcke abhängig von der Datenmenge in jedem Block unterschiedliche Größen aufweisen können, wobei die Steuereinheit (204) eingerichtet ist, um eines der Chunks variabler Größe, das eine Größe m aufweist, zu unterteilen, indem jeder Chunk in n Blöcke, die eine feste Größe k aufweisen, und einen Restblock, der die Größe p aufweist, unterteilt wird, wobei n das Ergebnis einer ganzzahligen Division von m/k ist und p der Rest der ganzzahligen Division ist,
- Erzeugen eines Satzes von Metadaten für die Datendatei (302, 502, 702), der Informationen beinhaltet, die die Größe jedes Blocks und die Größe jedes Chunks angeben
- Schreiben der Datendatei (302, 502, 702) und des Satzes von Metadaten in den schlüsselwertbasierten Speicher.

13. Steuereinheit (204) nach Anspruch 12, wobei die Steuereinheit (204) eingerichtet ist, um den Restblock als den letzten Block in dem Chunk variabler Größe zu platzieren.

14. Steuereinheit (204) nach einem der Ansprüche 12 - 13, wobei die Steuereinheit (204) ferner eingerichtet ist, um eine Deduplizierung an den mindestens zwei Blöcken basierend auf den Metadateninformationen hinsichtlich der Größe jedes Blocks durchzuführen.

15. Steuereinheit (204) nach einem der Ansprüche 12 - 13, wobei die Steuereinheit (204) ferner eingerichtet ist, um eine neue Datensequenz, die in die Datendatei (302, 502, 702) zu schreiben ist, zu empfangen, den Versatz und die Größe der neuen Datensequenz zu bestimmen und sie in die Datendatei (302, 502, 702) basierend auf dem Versatz ohne ein Ändern der Unterteilung in Chunks und Blöcke zu schreiben.

16. Schlüsselwertbasierte Speichervorrichtung (202), die eingerichtet ist, um eine Datendatei (302, 502, 702) zu speichern, wobei die schlüsselwertbasierte Speichervorrichtung (202) eine Steuereinheit (204) nach einem der Ansprüche 12 - 15 zum Steuern des Schreibens von Daten in die schlüsselwertbasierte Speichervorrichtung (202) umfasst.

17. Computerprogrammprodukt, das computerlesbaren Code umfasst, der, wenn er in einer Steuereinheit ausgeführt wird, die eine schlüsselwertbasierte Speichervorrichtung (202) steuert, das Schreiben der Datendatei (302, 502, 702) in die schlüsselwertbasierte Speichervorrichtung durch (202) Durchführen des Verfahrens nach einem der Ansprüche 1 - 11 steuern wird.

18. Computerprogrammprodukt nach Anspruch 17, das einen nichtflüchtigen Speicher umfasst, auf dem der Code gespeichert ist.

## Revendications

1. Procédé (100) de stockage d'un fichier de données (302, 502, 702) dans un système de stockage à base de valeurs clés (200) comprenant les étapes suivantes
- la division du fichier de données (302, 502, 702) en au moins deux segments de taille variable,
- la division de chacun des segments de taille variable en blocs, dans lequel les blocs peuvent avoir des tailles différentes en fonction de la quantité de données dans chaque bloc et dans lequel, pour l'un des segments de taille variable ayant une taille m, l'étape de division en blocs comprend la division de chaque segment en blocs comportant n blocs de taille fixe ayant une taille fixe k et un bloc résiduel ayant la taille p, n étant le résultat d'une division entière de m/k et p étant le reste de la division entière,
- la génération d'un ensemble de métadonnées pour le fichier de données (302, 502, 702) comportant des informations indiquant la taille de chaque bloc et la taille de chaque segment,
- l'écriture du fichier de données (302, 502, 702) et de l'ensemble de métadonnées dans le stockage à base de valeurs clés.

2. Procédé (100) selon la revendication 1, dans lequel le bloc résiduel est le dernier bloc du segment de taille variable.

3. Procédé (100) selon l'une quelconque des revendications précédentes, comprenant l'étape de
- la réalisation d'une déduplication sur les au moins deux blocs sur la base des informations de métadonnées relatives à la taille de chaque bloc.

4. Procédé (100) selon l'une quelconque des revendications précédentes, comprenant les étapes de réception d'une nouvelle séquence de données à écrire dans le fichier de données (302, 502, 702), la détermination du décalage et la taille de la nouvelle séquence de données et l'écriture dans le fichier de données (302, 502, 702) sur la base du décalage sans modifier la division en segments et en blocs.

5. Procédé (100) selon l'une quelconque des revendications précédentes, dans lequel k est égal à 8 KB ou à un multiple de 8 KB.

6. Procédé (100) selon l'une quelconque des revendications précédentes, dans lequel l'ensemble de métadonnées comporte également une première valeur de décalage indiquant le début du premier bloc du fichier de données (302, 502, 702).

7. Procédé (100) selon l'une quelconque des revendications précédentes, comprenant les étapes de division du fichier de données (302, 502, 702) en au moins deux segments de taille fixe ayant une taille fixe x, indépendamment de la division en segments de taille variable et au sein de chaque segment de taille fixe, et lors de l'écriture du fichier de données (302, 502, 702) dans le stockage de valeurs clés, y compris le remplissage pour chaque segment de taille fixe, ledit remplissage étant positionné au sein du segment de taille fixe et/ou après le segment de taille fixe.

8. Procédé (100) selon la revendication 7, dans lequel le remplissage de chaque segment de taille fixe est ajouté à une taille totale de segment de (1+n/y)*x, où n est la taille des blocs de taille fixe, y est la taille moyenne des segments de taille variable et x est la taille des segments de taille fixe.

9. Procédé (100) selon la revendication 7 ou 8, dans lequel chaque segment de taille fixe comprend des métadonnées indiquant un décalage de données dans le segment de taille fixe pour permettre un accès aléatoire aux données dans le fichier.

10. Procédé (100) selon la revendication 1, dans lequel l'étape d'écriture du fichier de données (302, 502, 702) dans le stockage de valeurs clés comporte, pour chaque segment de taille variable dans le fichier ayant une taille y : la compression du bloc de taille variable à une taille inférieure à y, l'écriture du segment variable compressé dans le stockage et le remplissage du segment variable jusqu'à la taille y arrondie à la taille du bloc.

11. Procédé (100) selon l'une quelconque des revendications précédentes, dans lequel un stockage de blocs est utilisé comme stockage de valeurs clés, en utilisant l'adresse du bloc comme clé, comprenant l'étape de remplissage du stockage de blocs avec des données compressibles jusqu'à la taille du bloc.

12. Unité de commande (204) pour un dispositif de stockage à base de valeurs clés (202) pour stocker un fichier de données (302, 502, 702), ladite unité de commande (204) étant disposée pour réaliser les étapes suivantes pour un fichier de données (302, 502, 702) étant stocké dans le dispositif de stockage (202) :
- la division du fichier de données (302, 502, 702) en au moins deux segments de taille variable
- la division de chacun des segments de taille variable en blocs, dans laquelle les blocs peuvent avoir des tailles différentes en fonction de la quantité de données dans chaque bloc, dans laquelle l'unité de commande (204) est disposée pour diviser un des segments de taille variable ayant une taille m, en divisant chaque segment en n blocs ayant une taille fixe k et un bloc résiduel ayant la taille p, n étant le résultat d'une division entière de m/k et p étant le reste de la division entière,
- la génération d'un ensemble de métadonnées pour le fichier de données (302, 502, 702) comportant des informations indiquant la taille de chaque bloc et la taille de chaque segment
- l'écriture du fichier de données (302, 502, 702) et de l'ensemble de métadonnées dans le stockage à base de valeurs clés.

13. Unité de commande (204) selon la revendication 12, l'unité de commande (204) est disposée pour placer le bloc résiduel comme dernier bloc dans le segment de taille variable.

14. Unité de commande (204) selon l'une quelconque des revendications 12 et 13, dans laquelle l'unité de commande (204) est en outre disposée pour réaliser une déduplication sur les au moins deux blocs sur la base des informations de métadonnées relatives à la taille de chaque bloc.

15. Unité de commande (204) selon l'une quelconque des revendications 12 et 13, dans laquelle l'unité de commande (204) est en outre disposée pour recevoir une nouvelle séquence de données à écrire dans le fichier de données (302, 502, 702), déterminer le décalage et la taille de la nouvelle séquence de données et l'écrire dans le fichier de données (302, 502, 702) sur la base du décalage sans modifier la division en segments et en blocs.

16. Dispositif de stockage à base de valeurs clés (202) disposé pour stocker un fichier de données (302, 502, 702), ledit dispositif de stockage à base de valeurs clés (202) comprenant une unité de commande (204) selon l'une quelconque des revendications 12 à 15, pour commander l'écriture des données sur le dispositif de stockage à base de valeurs clés (202).

17. Produit de programme informatique comprenant un code lisible par ordinateur qui, lorsqu'il est exécuté dans une unité de commande commandant un dispositif de stockage à base de valeurs clés (202), contrôlera l'écriture du fichier de données (302, 502, 702) sur le dispositif de stockage à base de valeurs clés (202) en réalisant le procédé selon l'une quelconque des revendications 1 à 11.

18. Produit de programme informatique selon la revendication 17, comprenant un stockage non transitoire sur lequel le code est stocké.
